# NEUE EUROPÄISCHE PATENTSCHRIFT

(11) **EP 3 315 012 B2**
(45) Veröffentlichungstag und Bekanntmachung des Hinweises auf die Entscheidung über den Einspruch: **19.06.2024**
(45) Hinweis auf die Patenterteilung: 15.04.2020
(21) Anmeldenummer: 17001744.6
(22) Anmeldetag: 24.10.2017
(51) Int. Cl.: A01D 90/04, A01F 15/10

(54) **ERNTEMASCHINE**
HARVESTER
MOISSONNEUSE

(30) Priorität: 28.10.2016 DE 202016006682 U
(43) Veröffentlichungstag der Anmeldung: 02.05.2018
(73) Patentinhaber: Maschinenfabrik Bernard Krone GmbH & Co. KG, 48480 Spelle (DE)
(72) Erfinder: Jung, Stefan, 48612 Horstmar (DE); Dresselhaus, Christian, 48480 Spelle (DE)
(74) Vertreter: Busse & Busse

(56) Entgegenhaltungen:
- EP-A1- 2 893 798
- EP-A1- 3 017 684
- DE-A1- 4 301 636
- DE-U1-202006 018 719
- DE-U1-202013 008 356

## Beschreibung

Die Erfindung betrifft eine Erntemaschine gemäß dem Oberbegriff des Anspruchs 1.

Derartige, z.B. aus der DE 20 2006 018 719 U1 bekannte Erntemaschinen werden eingesetzt, um Erntegut, insbesondere Stroh oder Grasschnitt, auch in Form von Heu, von einem Feld aufzunehmen. Gegebenenfalls findet dabei eine Zerkleinerung statt. Für die Zerkleinerung finden Erntemaschinen Anwendung, die einen Förder- und Schneidrotor aufweisen, an dem Förderelemente festgelegt sind, mit denen das Erntegut an Schneidmessern vorbeigeführt und dabei geschnitten wird.

Das Erntegut wird dabei durch eine Aufnahmeeinheit einem Schneidrotor als eine Erntegutmatte zugeführt. Die Förderelemente des Förderrotors durchdringen die Erntegutmatte, um den gesamten Erntegutstrom gegen die feststehenden Schneidmesser zu befördern. Um ein Durchstoßen der Emtegutmatte der Förderelemente zu erleichtern, weisen diese an ihrem äußeren Ende eine Förderspitze auf.

Erntegut, das sich beim Zerkleinerungsvorgang im Bereich der Förderspitze befindet, wird regelmäßig mit geringerer Qualität verarbeitet. Das Erntegut wird gequetscht, gerissen oder bleibt unzerkleinert, womit keine gleichmäßige Zerkleinerungsqualität erreicht ist.

Die EP 2 893 798 A1 zeigt und beschreibt einen Schneidrotor für eine landwirtschaftliche Erntemaschine. Zur Förderung durch ein mit Schneidmessern besetztes Schneidwerk ist der Schneidrotor mit wendelförmig angeordneten Förderronden versehen, wobei auf den, in Drehrichtung vorlaufenden stegförmigen Abschnitten der Förderronden plattenförmige Elemente zur Erzeugung von Führungsarbeitsflächen für das Erntegut angebracht sind. Zur Unterstützung eines bestimmten Erntegutfließverhaltens, beispielsweise zur Mitte des Schneidrotors gerichtet, sind die plattenförmigen Elemente unter einem Schrägungswinkel angestellt. Auch hier ist mangelnde Schnittqualität geltend zu machen, da das Eingreifen der dem Erntegutstrom zugewandten Abschnitte der Förderronden mit den darauf angebrachten plattenförmigen Elementen zu Quetschungen und Stauchungen des Erntegutes führen.

Der Erfindung liegt daher die Aufgabe zugrunde, eine Erntemaschine der eingangs genannten Art dahingehend weiterzuentwickeln, dass eine gleichmäßigere Zerkleinerungsqualität des Emtegutes ermöglicht wird.

Nach der Erfindung wird eine Erntemaschine, insbesondere Ladewagen oder Ballenpresse vorgeschlagen, mit einer Aufnahmeeinheit, vorzugsweise einer Pickupwalze, mit einem der Aufnahmeeinheit in Förderrichtung des Erntegutes nachgeordneten Förderkanal und mit einem Förderrotor, der eine Vielzahl von Förderelementen, beispielsweise Förderzinken aufweist, die in den Förderkanal hineinragen und an ihrem äußeren Ende eine Förderspitze aufweisen, sowie mit mehreren wahlweise in den Förderkanal hineinragenden Schneidmessern, die zur Zerkleinerung des Erntegutes mit den Förderelementen des Förderrotors zusammenwirken, wobei die Förderspitze des Förderelementes asymmetrisch zu einer Längsmittelebene des Förderelementes vorgesehen ist und die Förderspitze des Förderelementes einen geringeren seitlichen Lageabstand zu einem dem Förderelement zugeordneten Schneidmesser aufweist als die Längsmittelebene des Förderelements.

Die Förderelemente des Rotors verlaufen typischerweise zwischen zwei Schneidmessern. Das Schnittergebnis wird positiv dadurch beeinflusst, dass ein Förderelement mit einem dieser Schneidmesser bevorzugt zusammenwirkend ausgeführt ist. Dies kann z.B. dadurch erreicht werden, dass das Förderelement räumlich näher an dem zugeordneten Schneidmesser angeordnet ist. Dadurch, dass die asymmetrisch zur Längsmittelebene des Förderelements angeordnete Förderspitze dem zugeordneten Schneidmesser zugewandt ist, erfährt das Erntegut beim Zerkleinerungsvorgang im Bereich der Förderspitze eine verbesserte Führung und Unterstützung, die die Zerkleinerungsqualität in diesem Bereich verbessert.
Es ist vorteilhaft, wenn der Abstand zwischen dem Förderelement und dem dem Förderelement zugeordneten Schneidmesser so gewählt ist, dass ein scherenartiger Schnitt erfolgt. Das Förderelement ist hierfür so angeordnet, dass im Betrieb zwischen dem Schneidmesser und dem Förderelement nur ein geringer Abstand vorliegt bzw. sich das Förderelement und das Schneidmesser im Betrieb sogar berühren. Bei einer solchen schneidenden Anordnung des Förderelements mit dem zugeordneten Schneidmesser ist die Anordnung der Förderspitze asymmetrisch zur Längsmittelebene des Förderelements besonders vorteilhaft, da beim Zerkleinerungsvorgang auch im Bereich der Förderspitze befindliches Erntegut eine schneidende Zerkleinerung erfährt. Dies führt insgesamt zu einer verbesserten Qualität des zerkleinerten Erntegutes.

Erfindungsaemäß weist das Förderelement einen mit dem Förderrotor verbundenen Halter und ein am Halter befestigtes Aufsatzteil auf, das mit der Förderspitze versehen ist. Durch die Verwendung eines solchen Aufsatzteiles wird mit geringem Materialaufwand erreicht, dass das Förderelement das Erntegut beim Zerkleinerungsvorgang in einem wesentlichen Bereich zwischen zwei Schneidmessern unterstützt. Mit Vorteil weist das Förderelement eine effektive Breite auf, die zwischen 40 % und 80% des Abstandes zwischen zwei benachbarten Schneidmessern beträgt. Durch die Verwendung eines im Vergleich zum Abstand zweier benachbarter Schneidmesser breiten Förderelements wird eine gute Unterstützung des Erntegutes beim Schneidvorgang erreicht, so dass sich ein besseres Zerkleinerungsergebnis ergibt.

Erfindungsgemäß ist das Aufsatzteil asymmetrisch zu einer Längsmittelachse des Halters an diesem festgelegt. Durch die asymmetrische Festlegung kann die Unterstützung durch den Halter bis in den Bereich der asymmetrisch ausgeformten Förderspitze verbessert werden. Ebenfalls erfindungsgemäß ist der seitliche Lageabstand der dem zugeordneten Schneidmesser zugewandten Längsaußenkante des Aufsatzteils zur Längsmittelebene des Halters geringer als der seitliche Lageabstand der dem zugeordneten Schneidmesser abgewandten Längsaußenkante des Aufsatzteils. Durch diese Ausgestaltung wird die Aufnahme der Kräfte, die das Aufsatzteil bei Zerkleinerung des Erntegutes im Zusammenwirken mit dem dem Förderelement zugeordneten Schneidmesser erfährt, durch den Halter vereinfacht. Die Verschleißfestigkeit der Erntemaschine wird dadurch erhöht.

Gemäß einer besonderen Ausführungsform weist die im Betrieb den Schneidmessern zugewandte Seite des Förderelements in Richtung der Drehachse des Förderrotors betrachtet eine konvexe Krümmung auf. Beim Vorbeiführen des Förderelements an den Schneidmessern ergibt sich durch die konvex gebogene Ausführung ein kleinerer Winkel zwischen einer Tangente an die Oberfläche des Förderelements und einer Tangente an die Schneide des Schneidmessers. Hierdurch kommt es zu einer verbesserten Keilwirkung auf das Fördergut, das zwischen Schneidmesser und Förderelement festgelegt und an dieser Stelle mit höherer Qualität zerteilt wird.

In einer bevorzugten Ausgestaltung sind die einzelnen Förderelemente zueinander so versetzt auf dem Förderrotor angeordnet, dass sie eine spiralförmige Anordnung ausbilden. Dadurch kommt es zu einem gleichmäßig zeitversetzten Eingriff der Förderelemente mit ihren entsprechend zugeordneten Schneidmessern, so dass eine stoßartige Belastung des Förderrotors und der Befestigung der Schneidmesser sowle eine daraus resultierende Lastspitze im Antrieb des Förderrotors vermieden wird.

Gemäß einer besonderen Ausführungsform weisen die Schneidmesser einen Wellenschliff auf. Durch den Wellenschliff wird eine verbesserte Schneidwirkung der Schneidmesser erzielt, die auch durch ein einfaches einseitiges Nachschärfen der Schneidmesser nach Gebrauch wiederhergestellt werden kann.

Mit Vorteil Ist in einem Bereich in Förderrichtung vor der Aufnahmeeinheit ein Niederhalter angeordnet. Der Niederhalter bewirkt eine Vorverdichtung des Erntegutstromes und in der Folge eine feste und kompakte Erntegutmatte, die dem Förderrotor zugeführt wird. Dies ermöglicht eine bessere Auslastung des Förderrotors und somit eine höhere Schneidleistung.

Es ist vorteilhaft, wenn die Schneidmesser herausnehmbar in einem Messerrahmen festgelegt sind. Dadurch können einzelne beschädigte Schneidmesser ausgetauscht bzw. verschlissene herausgenommen, nachgeschärft und wieder eingesetzt werden.

In einer vorteilhaften Ausgestaltung des Erfindungsgegenstandes sind die Schneidmesser verschwenkbar im Messerrahmen festgelegt. Die Schneidmesser können somit beispielsweise im Falle einer Verstopfung einfach aus dem Förderkanal herausgeschwenkt werden, um die Verstopfung zu entfernen, In einer besonders vorteilhaften Ausführung sind die Schneidmesser so befestigt, dass einzelne Schneidmesser bei Überlastung selbsttätig aus dem Förderkanal ausschwenken und wieder zurückschwenken können. Hierdurch werden die Schneidmesser vor Beschädigung oder Bruch durch im Erntegutstrom befindliche Fremdkörper wie Steine oder Äste geschützt. Zudem wird eine erhöhte Leistungsaufnahme der Erntemaschine vermieden,

Mit Vorteil sind im Förderkanal in Förderrichtung verlaufende Stege festgelegt und mindestens ein dem Förderelement zugeordneter Steg ist derart ausgebildet, dass er während eines Umlaufs des Förderelements zumindest teilweise in eine Ausnehmung des Förderelements im Bereich seiner Förderspitze hineinragt. Die Stege bewirken eine Verdrängung des Erntegutes, so dass in dem Bereich des Förderkanals, in dem die Stege angeordnet sind, weniger Erntegut im Förderspitzenbereich vorhanden ist. Die Zerkleinerung des Ernteguts wird damit von dem problematischen Förderspitzenbereich wegverlagert. Ferner können die Stege ein Anheben der Erntegutmatte zur Folge haben. Ein Durchstechen der Erntegutmatte mit den Förderelementen des Förderrotors ist somit leichter möglich. Als zusätzlicher Effekt wird ein Verschleiß im Förderkanal von den den Förderkanal begrenzenden Blechen auf die entsprechenden Stege verschoben. Dadurch wird die Reibung verringert und die Langlebigkeit der Erntemaschine erhöht.

Mit Vorteil weisen die Stege einen rechteckigen Querschnitt auf, Rechteckige Stege sind einfach herzustellen und können einfach im Förderkanal festgelegt werden. Zudem verteilt sich bei Verwendung von rechteckigen Stegen die Belastung durch das Erntegut und somit der Verschleiß auf die dem Förderkanal zugewandte plane Oberseite des Steges. Die Lebensdauer der Stege und damit die Lebendauer der Erntemaschine werden somit verbessert.

In einer bevorzugten Ausgestaltung sind zwischen zwei Schneidmessern auf mindestens einer Seite der Förderelemente mindestens zwei Stege unterschiedlicher Höhe angeordnet. Der Steg geringerer Höhe weist dabei einen geringeren seitlichen Lageabstand zur Förderspitze des zugeordneten Förderelements auf als der Steg größerer Höhe. Durch die Verwendung mehrerer unterschiedlich hoher Stege steht eine einfache Möglichkeit zur Verfügung, den von der Förderspitze bei einem Umlauf des Förderrotors freibleibenden Bereich möglichst vollständig mit Stegmaterial auszufüllen und somit den Abstand zwischen den Stegen und einer die Förderspitze ausbildenden Seitenkante des Förderelementes zu minimieren. Weiterhin ist bei Verwendung von mindestens zwei Stegen ein Austausch nur des höheren Steges möglich, der verstärktem Verschleiß unterliegt.

Besonders vorteilhaft ist der Steg geringerer Höhe kürzer als der Steg höherer Höhe ausgeführt. Eine solche Ausgestaltung dient einer verbesserten Führung des Ernteguts im Bereich der Förderspitze. Diese verbesserte Führung hat ein verbessertes Schnittergebnis zur Folge, da ein Reißen oder Quetschen des Erntegutes weitgehend vermieden wird.

In einer besonders vorteilhaften Ausgestaltung Ist ein Steg auf der dem zugeordneten Schneidmesser abgewandten Seite der Förderspitze angeordnet. Hierdurch kann mit nur einem Steg ein weiter Bereich der die Förderspitze bildenden Ausnehmung am Förderelement, der beim Umlauf des Förderelements um den Förderrotor frei bleibt, ausgefüllt werden.

In einer vorteilhaften Ausgestaltung der Erfindung weisen die Stege an dem der Aufnahmeeinheit zugewandten Ende eine Schräge oder Abrundung auf. Das Fördergut kann durch die Ausgestaltung der Stege mit einer solchen Schräge oder Abrundung allmählich und kontinuierlich angehoben werden. Die Stege stellen somit kein plötzlich auftauchendes Hindemis dar. Ein Verhaken des Fördergutes an den der Aufnahmeelnhelt zugewandten Kanten der Stege und somit ein Quetschen oder Reißen des Erntegutes wird weitgehend verhindert. Als weiterer Vorteil wird durch Verringerung der Reibung die Leistungsaufnahme der Erntemaschine verringert.

In einer besonderen Ausführungsform sind die Stege durch Schweißen befestigt. Schweißen stellt eine dauerhafte und sichere Befestigungsmöglichkeit der Stege dar.

Gemäß einer besonderen Ausführungsform sind die Stege auf einem Einlegeblech befestigt, das im Förderkanal festlegbar ist. Die Stege können somit je nach Bedarf in den Förderkanal eingebracht oder aus diesem entfernt werden,

Es ist vorteilhaft, wenn die Förderräume des Förderrotors entlang seiner Längsachse unterschiedlich ausgestaltet sind. Der Förderraum ist dabei der Raum, der durch den Hüllkreis der Förderspitzen der Förderelemente und die Konturen des Förderrotors zwischen zwei in Umfangsrichtung des Förderrotors benachbarten Förderelementen, die in Richtung der Förderspitzen offen sind, begrenzt ist. Die Größen der in Längsrichtung des Förderrotors beabstandeten Förderräume sind unterschiedlich ausgebildet. Hierdurch kann der für die Förderung eines Erntegutstromes zur Verfügung stehende Förderraum an die zu erwartende Erntegutstromstärke angepasst werden. Das Erntegut wird stärker geführt und unterstützt, was ein besseres Schneidergebnis zur Folge hat. Es wird vermieden, dass das Erntegut gequetscht, gerissen oder gar nicht zerkleinert wird.

Mit Vorteil sind die Förderräume In Randbereichen des Förderrotors kleiner als in Zentralbereichen. Üblicherweise ist in einem Schwad auf dem Feld In den Randbereichen des Schwades weniger Erntegut vorhanden als in Zentralbereichen. Dadurch, dass in Randbereichen des Förderrotors der Förderraum ein geringeres Volumen aufweist, erfährt das Fördergut, das sich in Randbereichen des Schwades befindet, eine verbesserte Unterstützung beim Zerkleinerungsvorgang, was eine verbesserte Zerkleinerungsqualität zur Folge hat.

Gemäß einer besonderen Ausführungsform weist der Förderrotor mehrere Zonen auf, in denen die Förderräume unterschiedlich groß sind. Durch die schrittweise Veränderung der Förderräume des Förderrotors kann der Förderrotor mit überschaubarem konstruktivem Aufwand an den zu erwartenden Erntegutstrom angepasst werden. Beispielsweise ist eine Einteilung in drei Abstufungen für einen geringen, mittleren und hohen Erntegutstrom denkbar.

Mit Vorteil sind die Förderräume im Bereich der je zwei bis sechs äußeren Reihen von Förderelementen, d.h. in Umfangsrichtung hintereinander angeordneten Förderelemente, mit einer geringen Größe für einen geringen Erntegutstrom ausgestaltet. Im Bereich der daran anschließenden je zwei bis sechs Reihen von Förderelementen sind die Förderräume mit einer mittleren Größe für einen mittleren Erntegutstrom ausgestaltet. In dem Bereich zwischen den Randbereichen sind die Förderräume mit einer großen Größe für einen hohen Erntegutstrom ausgestaltet. Hierdurch werden Zonen in den Randbereichen des Förderrotors definiert, die der üblichen Verteilung in einem Schwad Rechnung tragen, Bei einem Schwad ist im Bereich der Flanke des Schwades die Erntegutstärke stark abnehmend, Dem kann durch eine Einteilung in Zonen gerade in den Randbereichen des Förderrotors Rechnung getragen werden. Dadurch wird in den Randbereichen das Fördergut verbessert unterstützt, ohne die Durchsatzleistung in einem zentralen Mittelbereich des Förderrotors zu beeinträchtigen.

In einer bevorzugten Ausgestaltung werden die unterschiedlichen Förderräume durch eine unterschiedliche Formgebung der Förderelemente ausgestaltet Unterschiedliche Größen der Förderräume können somit auf eine einfache Weise hergestellt werden.

Gemäß einer bevorzugten Ausführungsform sind die Förderelemente an Ringsegmenten angeordnet oder zumindest teilweise als Ringsegmente ausgeformt. Ein Ringsegment kann dabei mehrere Förderelemente aufweisen. Mit Hilfe solcher Ringsegmente lassen sich die Förderelemente vereinfacht an dem Förderrotor festlegen. Aus den Ringsegmenten lässt sich am Förderrotor ein umlaufender Ring erstellen. Durch eine Verbindung der Ringsegmente untereinander kann die Stabilität der Förderelemente auf dem Förderrotor verbessert werden. Die Ringsegmente können dann beispielsweise durch im Wesentlichen einen Grundkörper des Förderrotors in Umfangsrichtung umlaufende Schweißnähte festgelegt werden. Dies erleichtert die Herstellung des Förderrotors.

Besonders bevorzugt können in Längsrichtung des Förderrotors unterschiedliche Größen der Förderräume durch eine Veränderung des Außendurchmessers des aus den Ringsegmenten ergebenden Kreisrings ausgebildet werden.

Eine weitere alternative Ausführungsform sieht vor, die Förderräume fallweise durch das Anbringen von Abdeckungen in ihrer Größe zu variieren. Insbesondere wenn Erntegutschwaden eine ungleichmäßige Stärke aufweisen, kann durch die Verwendung von Abdeckungen zwischen benachbarten Förderelementen ein Raum verschlossen und somit der für das Erntegut freibleibende Förderraum verkleinert werden. Das Erntegut hat somit weniger Möglichkeiten, beim Zerkleinerungsvorgang den Schneidmessern auszuweichen. Zudem stützt sich das Erntegut bei enger Packung im freibleibenden Förderraum selbst ab, so dass ein verbessertes Zerkleinerungsergebnis erzielt werden kann.

Besonders vorteilhaft ist die Abdeckung in Randbereichen des Förderrotors angeordnet. Bei einem üblichen Schwad ist gerade in den Randbereichen des Schwades weniger Erntegut vorhanden als in den Zentralbereichen, so dass im Randbereich befindliches Erntegut bei Verwendung eines Rotors ohne eine solche Abdeckung vergleichswiese viel Raum hat, um unzerkleinert an einem Schneidmesser vorbeigeführt zu werden. Wird ein Raum zwischen benachbarten Förderelementen durch eine Abdeckung in den Randberelchen verschlossen, steht für das Erntegut dort weniger verbleibender Raum zu Verfügung. Die Führung des Erntegutes gegenüber dem Schneidmesser wird verbessert, was sich positiv auf das Zerkleinerungsergebnis auswirkt.

Besonders vorteilhaft werden Abdeckungen unterschiedlicher Größe am Förderrotor eingesetzt, die am Förderrotor mehrere Zonen unterschiedlich großer verschlossener Räume ausbilden. Der Förderrotor kann somit besser auf die Form eines Erntegutschwades auf einem Feld angepasst werden. In Zentralbereichen des Förderrotors werden keine Abdeckungen angeordnet, um einen hohen Durchsatz des Erntegutes zu erreichen. In den zu den Flankenbereichen des Erntegutschwades korrespondierenden Bereichen des Förderrotors werden hingegen Abdeckungen eingesetzt, die dem dort weniger stark vorhandenen Erntegutstrom Rechnung tragen und eine verbesserte Führung des Erntegutes in diesen Bereichen gegenüber den Schneidmessem ermöglichen.
Besonders bevorzugt sind an den je zwei bis sechs äußeren Reihen von Förderelementen, d.h. einzelnen Förderelementen, die in Umfangsrichtung hintereinander auf dem Förderrotor angeordnet sind, erste Abdeckungen und an den je zwei bis sechs daran anschließenden Reihen von Förderelementen zweite Abdeckungen angeordnet, wobei die zweiten Abdeckungen einen kleineren Raum verschließen als die ersten Abdeckungen. Der Rotor wird hierdurch in fünf einzelnen Zonen eingeteilt, wobei die jeweils äußersten Zonen für schwache Erntegutströme die anschließenden Zonen für mittelstarke Erntegutströme und die mittlere Zone für starke Erntegutströme optimiert sind.

In einer vorteilhaften Ausgestaltung ist die Abdeckung zwischen den in Umfangsrichtung des Förderrotors hintereinander auf dem Förderrotor angeordneten Förderelementen festgelegt. Sie befinden sich in einer Ebene mit den Förderelementen, so dass eine konstruktive Änderung an den Schneidmessern vermieden wird, die zwischen den Ebenen der Förderelemente angeordnet sind und andernfalls ggf. mit Abdeckungen in Kontakt kommen könnten. Ferner ist dadurch weniger Material der Abdeckung notwendig. Eine solche Abdeckung bewirkt ein Anheben des Erntegutstroms im Förderrotor. Die Abdeckung nur dieser kleinen Räume hat eine ähnliche Wirkung wie eine Abdeckung des Bereiches zwischen zwei benachbarten Ebenen von Förderelementen.

Mit Vorteil ist die Abdeckung durch ein zwischen benachbarte Förderelemente festgelegtes Blech gebildet. Eine solche Abdeckung ist einfach und kostengünstig herzustellen.

In einer bevorzugten Ausgestaltung wird die Abdeckung durch Schweißen am Förderrotor festgelegt. Hierdurch wird eine dauerhafte und sichere Verbindung zwischen Abdeckung und Förderrotor erreicht, die einer langen Lebensdauer der Erntemaschine entgegenkommt.

Weitere Vorteile und Einzelheiten ergeben sich aus den Ansprüchen und Unteransprüchen sowie einem Ausführungsbeispiel der Erfindung, das im Folgenden beschrieben wird; Es zeigen:
- Fig. 1: eine Erntemaschine,
- Fig. 2: ein Ausschnitt des Förderkanals mit Förderrotor,
- Fig. 3: einen Förderrotor,
- Fig. 4: einen Förderrotor und Schneidmesser im Förderkanal,
- Fig. 5: einen Förderrotor und Schneidmesser im Förderkanal mit Abdeckungen,
- Fig. 6: Messer, Förderelemente und Förderkanal gegen die Förderrichtung betrachtet.

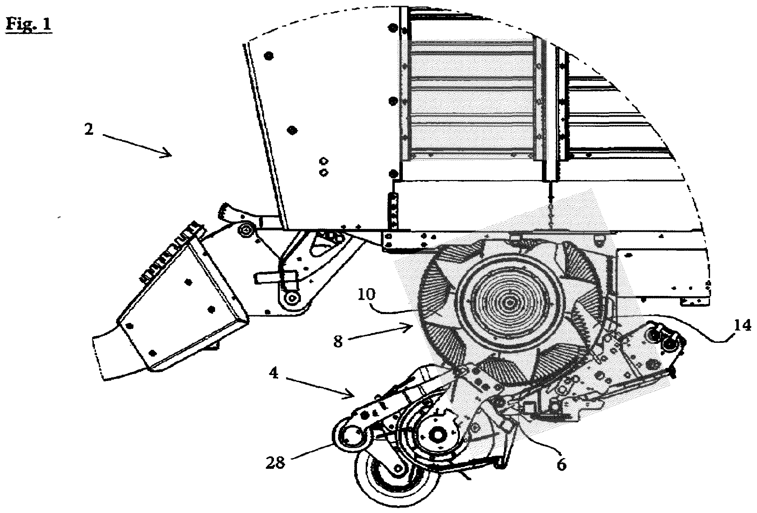

Fig. 1 zeigt eine Erntemaschine 2 mit einer Aufnahmeeinheit 4, die hier als Pickupwalze ausgestaltet ist. In Förderrichtung der Pickupwalze schießt sich der Förderkanal 6 an. Oberhalb des Förderkanals 6 ist der Förderrotor 8 mit den Förderelementen 10 angeordnet. Diese wirken mit den Schneidmessern 14 zusammen, die von der gegenüberliegenden Seite in den Förderkanal 6 hineinragen. Die Förderelemente 10 umfassen dabei einen Halter 18 und ein Aufsatzteil 20. Die Förderelemente 10 des Förderrotors 8 fördern das Erntegut an den Schneidmessern 14 vorbei in den Aufnahmebereich der Erntemaschine. Vor der Aufnahmeeinheit 4 ist ein Niederhalter 28 angeordnet.

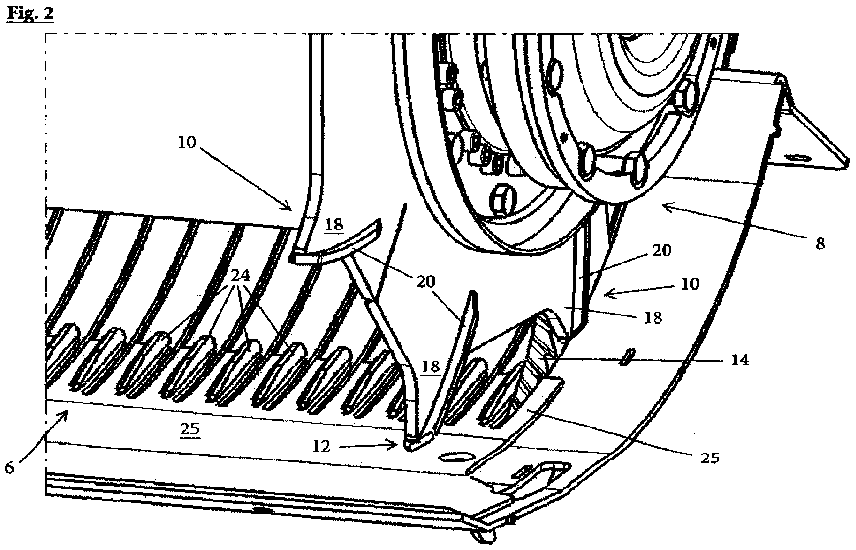

Fig. 2 zeigt einen Ausschnitt des Förderkanals 6 mit dem Förderrotor 8. Am Förderrotor 8 ist eine Reihe von in Umfangsrichtung hintereinander auf dem Förderrotor 8 festgelegter Förderelemente 10 dargestellt. Weitere Förderelemente 10 sind für eine bessere Übersichtlichkeit aus der Darstellung weggelassen worden. Die Förderelemente 10 umfassen einen Halter 18 und ein Aufsetzteil 20. Das Aufsatzteil 20 bildet dabei die Förderspitze 12 aus. Weiter ist ein Teil des Förderkanals 6 dargestellt, in den Schlitze für die Schneidmesser 14 eingebracht sind, sowie ein Schneidmesser 14, das mit den dargestellten Förderelementen 10 des Förderrotors 8 zusammenwirkt. Weiterhin sind die Stege 24 dargestellt. Die Stege 24 sind durch je zwei rechteckige Elemente unterschiedlicher Höhe ausgebildet und auf einem Leitblech 25 befestigt dargestellt. Die rechteckigen Elemente weisen an ihrem der Aufnahmeeinheit 4 zugewandten Ende eine Abschrägung auf. Die Stege 24 sind in einem Bereich in Förderrichtung des Beginns der Schlitze für die Schneidmesser 14 angeordnet.

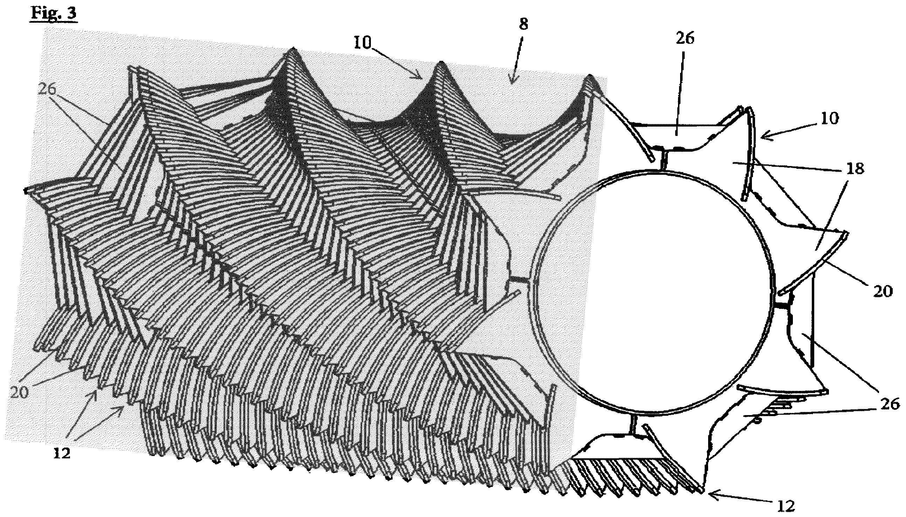

Fig. 3 zeigt den Förderrotor 8 mit Abdeckungen 26. Die Abdeckungen 26 sind hier jeweils zwischen zwei In Umfangsrichtung aufeinanderfolgenden Förderelementen 10, angeordnet, wobei jedes Förderelement 10 einen Halter 18 und ein Aufsatzteil 20 umfasst. Die Abdeckungen 26 sind als Bleche ausgestaltet, die zwischen je zwei aufeinanderfolgende Förderelemente 10 eingeschweißt sind. Am dargestellten Förderrotor 8 sind fünf Zonen erkennbar. Die jeweils vier äußeren Reihen von in Umfangsrichtung des Förderrotors 8 hintereinander angeordneten Förderelementen 10 weisen Abdeckungen 26 einer großen Höhe auf, die vier daran anschließenden Reihen von Förderelementen 10 weisen Abdeckungen 26 niedrigerer Höhe auf, während der Mittelteil des Förderrotors 8 keine Abdeckungen 26 aufweist. Der Raum zwischen zwei benachbarten Reihen an Förderelementen 10 bleibt durch die Abdeckung 26 unabgedeckt. In diesen können Schneidmesser 14 eingeführt werden. Durch die Anordnung der Abdeckungen 26 wird die Größe der Förderräume 13 zwischen zwei in Umfangsrichtung des Förderrotors 8 benachbart angeordneten Förderelementen 10 an die erwartete Stärke des Erntegutstroms angepasst. Die Größen der Förderräume 13 sind in den Randbereichen des Förderrotors 8 geringer als in einem Zentralbereich. Der Übergang erfolgt hier in zwei diskreten Stufen. Weiterhin ist die spiralförmige Anordnung der Förderelemente 10 auf dem Förderrotor 8 erkennbar.

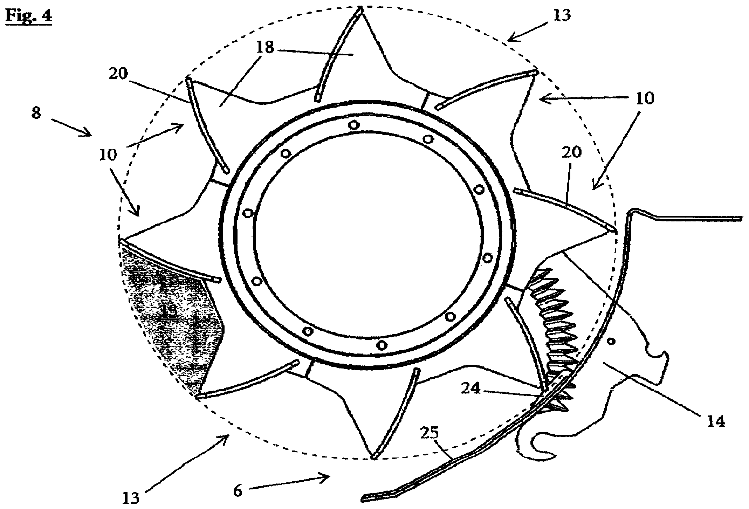

Die Fig. 4 zeigt einen Schnitt durch den Förderrotor 8 in dem oben angesprochenen Mittelteil. Dargestellt Ist der Förderkanal 6, In den von der einen Seite die am Förderrotor 8 angeordenten Förderelemente 10, jeweils umfassend einen Halter 18 und ein Aufsatzteil 20, hineinreichen und von der anderen Seite ein Schneidmesser 14 hereinragt. Weiterhin ist im Förderkanal 6 ein Steg 24 dargestellt. Es ist erkennbar, dass die dem Schneidmesser 14 zugewandte Seite des Förderelementes 10, wo das Aufsatztell 20 angeordnet ist, konvex gebogen ist. Erntegut wird durch die Aufsatzteile 20 der Förderelemente 10 an den Schneidmessern 14 gefördert. Dabei wird das Erntegut zerkleinert. In einem Bereich vor den Schneidmessern 14 wird das Erntegut durch Stege 24 angehoben.

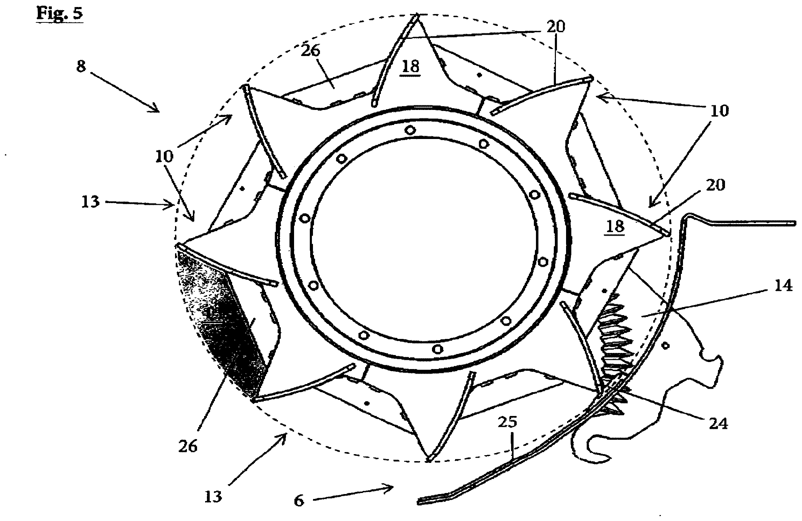

Fig. 5 zeigt einen Querschnitt durch den Förderrotor 8 und den Förderkanal 6 in einem Randbereich mit Abdeckungen 26 zwischen den einzelnen Förderelementen 10, umfassend einen Halter 18 und ein Aufsatzteil 20. Die Abdeckungen 26 verschließen dabei einen Teil des Raumes zwischen den sich in Umfangsrichtung folgenden, benachbarten Förderelementen 10. Hierdurch werden die für das Erntegut zur Verfügung stehenden Förderräume 13 begrenzt. Insbesondere in Randbereichen des Förderrotors 8 ist der Erntegutstrom schwächer ausgeprägt. Durch die Verringerung der Förderräume 13 durch die Abdeckungen 26 erfährt das Erntegut eine verbesserte Führung gegenüber den Schneidmessern 14. Dadurch wird ein verbessertes Zerkleinerungsergebnis erreicht.

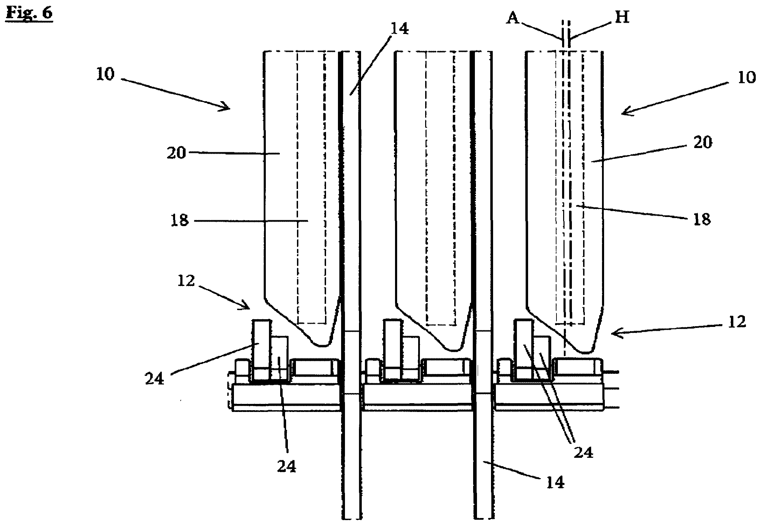

Fig. 6 zeigt einen Ausschnitt des Förderkanals 6, bei dem die Schneidmesser 14 in einem Schnitt und die Förderelemente 10 gegen die Förderrichtung betrachtet werden. Es sind drei Förderelemente 10 zu erkennen, bei denen die Aufsatzteile 20 jeweils mit einer Förderspitze 12 versehen sind. Weiterhin sind im Förderkanal 6 angeordnete Stege 24 dargestellt. Jedes Förderelement 10 umfasst ein Aufsatzteil 20, das mit einem zugeordneten Schneidmesser 14 zusammenarbeitet. Der Abstand zwischen einer dem zugeordneten Schneidmesser 14 zugewandten Längsaußenkante des Aufsatzteils 20 des Förderelements 10 weist einen deutlich geringeren Abstand zum zugeordneten Schneidmesser 14 auf als die abgewandte Längsaußenkante des Aufsatzteils zum benachbarten Schneidmesser 14. Hierdurch wird zwischen Förderelement 10 und zugeordnetem Schneidmesser 14 ein scherenartiger Schnitt des Ernteguts bewirkt.

Ferner ist zu erkennen, dass die Förderspitze 12 des Aufsatzteils 20 des Förderelements 10 asymmetrisch gegenüber einer Längsmittelebene A des Aufsatzteils 20 sowie gegenüber einer Längsmittelebene H des Halters 18 in Richtung des zugeordneten Schneidmessers 14 versetzt Ist. Die im Bereich der Förderspitze 12 vom Schneidmesser 14 sich entfernende Kante des Aufsatzteils 20 entfernt sich durch diese asymmetrische Ausbildung der Förderspitze 12 nur wenig vom Schneidmesser 14. Hierdurch wird auch im Bereich der Förderspitze 12 noch eine ausreichende Schneidwirkung in der Zusammenwirkung zwischen dem Förderelement 10 mit der Förderspitze 12 und dem zugeordneten Schneidmesser 14 erreicht.

Ferner ist erkennbar, dass das Aufsatzteil 20 asymmetrisch auf dem Halter 18 befestigt ist, so dass die dem zugeordneten Schneidmesser 14 zugewandte Längsaußenkante des Aufsatzteils 20 einen geringeren Abstand zur Längsmittelebene H des Halters 18 aufweist als die dem zugeordneten Schneidmesser 14 abgewandte Längsaußenkante des Aufsatzteils 20 des Förderelements 10. Durch den scherenartigen Schnitt zwischen Schneidmesser 14 und Förderelement 10, das hier als Förderelement 10 mit Halter 18 und Aufsatzteil 20 ausgestaltet ist, kommt es zu einer erhöhten Belastung des Aufsatzteils 20 auf der dem zugeordneten Schneidmesser 14 zugewandten Seite. Durch die asymmetrische Anordnung des Aufsatzteils 20 auf dem Halter 18 wird die auf das Aufsatzteil 20 wirkende Last verbessert aufgenommen und in den Halter 18 abgeleitet. Der dem zugeordneten Schneidmesser 14 abgewandten Seite gegenüber dem Halter 18 überstehenden Teil des Aufsatzteils 20 dient in erster Linie der Führung des Ernteguts und erfährt eine weniger starke Belastung.

Ferner ist zu sehen, dass in einem Bereich, in dem durch eine schräge Ausnehmung am Aufsatzteil 20 die Förderspitze12 ausgebildet wird, auf der dem zugeordneten Schneidmesser abgewandten Seite der Förderspitze 12 Stege 24 angeordnet sind. Hier sind zwei Stege 24 mit einem rechteckigen Querschnitt, ein Steg 24 mit einer größeren Höhe sowie ein benachbarter Steg 24 mit einer geringen Höhe, angeordnet. Durch die Verwendung von zwei rechteckigen Stegen 24 unterschiedlicher Höhe kann die Form der Ausnehmung, die die Förderspitze 12 bildet, mit rechteckigen Stegen 24 angenähert werden. Die Stege 24 dienen dazu, das Erntegut anzuheben, so dass sich nur wenig Erntegut im Bereich der Förderspitze 12 befindet. Dadurch wird das Zerkleinerungsergebnis verbessert. Der Steg 24 geringerer Höhe ist dabei näher an dem zugeordneten Schneidmesser 14 und an der Förderspitze 12 angeordnet als der Steg 24 mit der größeren Höhe.

## Patentansprüche

1. Erntemaschine (2), insbesondere Ladewagen oder Ballenpresse, mit einer Aufnahmeeinheit (4), vorzugsweise einer Pickupwalze, mit einem der Aufnahmeeinheit (4) in Förderrichtung des Erntegutes nachgeordneten Förderkanal (6) und mit einem Förderrotor (8), der eine Vielzahl von Förderelementen (10), beispielsweise Förderzinken, aufweist, die in den Förderkanal (8) hineinragen und an ihrem äußeren Ende eine Förderspitze (12) aufweisen, sowie mit mehreren wahlweise in den Förderkanal (6) hineinragenden Schneidmessern (14), die zur Zerkleinerung des Erntegutes mit den Förderelementen (10) des Förderrotors (8) zusammenwirken, wobei die Förderspitze (12) des Förderelementes (10) asymmetrisch zu einer Längsmittelebene des Förderelementes (10) vorgesehen ist, wobei die Förderspitze (12) des Förderelementes (10) einen geringeren seitlichen Lageabstand zu einem dem Förderelement (10) zugeordneten Schneidmesser (14) aufweist als die Längsmittelebene des Förderelements (10), wobei ein Förderelement (10) einen mit dem Förderrotor (8) verbundenen Halter (18) und ein mit der Förderspitze (12) versehenes, an dem Halter (18) befestigtes Aufsatzteil (20) aufweist, **dadurch gekennzeichnet, dass** das Aufsatzteil (20) asymmetrisch zu einer Längsmittelebene (H) des Halters (18) an diesem befestigt ist, wobei der seitliche Lageabstand der dem zugeordneten Schneidmesser (14) zugewandten Längsaußenkante des Aufsatzteils (20) zur Längsmittelebene (H) des Halters (18) geringer ist als der seitliche Lageabstand der dem zugeordneten Schneidmesser (14) abgewandten Längsaußenkante des Aufsatzteils (20).

2. Erntemaschine (2) nach Anspruch 1, **dadurch gekennzeichnet, dass** der Abstand zwischen dem Förderelement (10) und dem, dem Förderelement (10) zugeordneten Schneidmesser (14) so gewählt ist, dass ein scherenartiger Schnitt des Erntegutes erfolgt.

3. Erntemaschine (2) nach einem der vorhergehenden Ansprüche, **dadurch gekennzeichnet, dass** die im Betrieb den Schneidmessern (14) zugewandte Seite des Förderelementes (10) in Richtung der Drehachse des Förderrotors (8) betrachtet konvex gebogen ist.

4. Erntemaschine (2) nach einem der vorhergehenden Ansprüche, **dadurch gekennzeichnet, dass** die einzelnen Förderelemente (10) zueinander so versetzt angeordnet sind, dass sie eine spiralförmige Anordnung auf dem Förderrotor (8) ausbilden.

5. Erntemaschine (2) nach einem der vorhergehenden Ansprüche, **dadurch gekennzeichnet, dass** im Förderkanal (6) in Förderrichtung verlaufende Stege (24) festgelegt sind und mindestens ein dem Förderelement (10) zugeordneter Steg (24) derart ausgebildet ist, dass er während eines Umlaufs des Förderelementes (10) zumindest teilweise in eine Ausnehmung des Förderelementes (10) im Bereich seiner Förderspitze (12) hineinragt.

6. Erntemaschine (2) nach Anspruch 5, **dadurch gekennzeichnet, dass** zwischen zwei Schneidmessern (14) auf mindestens einer Seite der Förderelemente (10) mindestens zwei Stege (24) unterschiedlicher Höhe angeordnet sind, wobei der Steg (24) geringerer Höhe einen geringeren seitlichen Lageabstand zur Förderspitze (12) des zugeordneten Förderelementes (10) aufweist als der Steg (24) größerer Höhe.

7. Erntemaschine (2) nach Anspruch 6, **dadurch gekennzeichnet, dass** die Stege (24) geringerer Höhe kürzer als die Stege (24) größerer Höhe sind.

8. Erntemaschine (2) nach einem der Ansprüche 5 bis 7, **dadurch gekennzeichnet, dass** mindestens ein Steg (24) auf der dem zugeordneten Schneidmesser (14) abgewandten Seite der Förderspitze (12) angeordnet ist.

9. Erntemaschine (2) nach einem der Ansprüche 5 bis 8, **dadurch gekennzeichnet, dass** die Stege (24) an dem der Aufnahmeeinheit (4) zugewandten Ende eine Schräge oder Abrundung aufweisen.

10. Erntemaschine (2) nach einem der Ansprüche 5 bis 9, **dadurch gekennzeichnet, dass** die Stege (24) durch Schweißen befestigt sind.

11. Erntemaschine (2) nach einem der Ansprüche 5 bis 10, **dadurch gekennzeichnet, dass** die Stege (24) auf einem Einlegeblech (25) befestigt sind, das im Förderkanal (6) festlegbar ist.

## Claims

1. Harvesting machine (2), in particular a forage wagon or baler, comprising a pick-up unit (4), preferably a pick-up roller, comprising a conveying channel (6) downstream of the pick-up unit (4) in the conveying direction of the harvested crop and comprising a conveying rotor (8) which has a large number of conveying elements (10), for example conveying tines, which project into the conveying channel (6) and have a conveying tip (12) at their outer end, and comprising a plurality of cutting blades (14) which optionally project into the conveying channel (6) and interact with the conveying elements (10) of the conveying rotor (8) in order to comminute the harvested crop, the conveying tip (12) of the conveying element (10) being provided so as to be asymmetrical in relation to a central longitudinal plane of the conveying element (10), wherein the conveying tip (12) of the conveying element (10) has a smaller lateral positional distance from a cutting blade (14) associated with the conveying element (10) than the central longitudinal plane of the conveying element (10), a conveying element (10) having a holder (18) which is connected to the conveying rotor (8), and an attachment part (20) which is provided with the conveying tip (12) and is fastened to the holder (18), **characterized in that** the attachment part (20) is fastened to the holder (18) so as to be asymmetrical in relation to a central longitudinal plane (H) of said holder, the lateral positional distance of the longitudinal outer edge of the attachment part (20) that faces the associated cutting blade (14), in relation to the central longitudinal plane (H) of the holder (18), being less than the lateral positional distance of the longitudinal outer edge of the attachment part (20) that faces away from the associated cutting blade (14).

2. Harvesting machine (2) according to Claim 1, **characterized in that** the distance between the conveying element (10) and the cutting blade (14) associated with the conveying element (10) is selected such that the harvested crop is cut in a scissor-like manner.

3. Harvesting machine (2) according to either of the preceding claims, **characterized in that** the side of the conveying element (10) that faces the cutting blades (14) during operation is curved in a convex manner when viewed in the direction of the rotational axis of the conveying rotor (8).

4. Harvesting machine (2) according to any of the preceding claims, **characterized in that** the individual conveying elements (10) are arranged so as to be offset from one another such that they form a spiral arrangement on the conveying rotor (8).

5. Harvesting machine (2) according to any of the preceding claims, **characterized in that** projections (24) which extend in the conveying direction are secured in the conveying channel (6) and at least one projection (24) which is associated with the conveying element (10) is formed such that it projects at least partly into a recess of the conveying element (10) in the region of its conveying tip (12) during a revolution of the conveying element (10).

6. Harvesting machine (2) according to Claim 5, **characterized in that** at least two projections (24) of different heights are arranged between two cutting blades (14) on at least one side of the conveying elements (10), the projection (24) of smaller height having a smaller lateral positional distance from the conveying tip (12) of the associated conveying element (10) than the projection (24) of greater height.

7. Harvesting machine (2) according to Claim 6, **characterized in that** the projections (24) of smaller height are shorter than the projections (24) of greater height.

8. Harvesting machine (2) according to any of Claims 5 to 7, **characterized in that** at least one projection (24) is arranged on the side of the conveying tip (12) that faces away from the associated cutting blade (14).

9. Harvesting machine (2) according to any of Claims 5 to 8, **characterized in that** the projections (24) have a bevel or rounding at the end which faces the pick-up unit (4).

10. Harvesting machine (2) according to any of Claims 5 to 9, **characterized in that** the projections (24) are fastened by welding.

11. Harvesting machine (2) according to any of Claims 5 to 10, **characterized in that** the projections (24) are fastened to an insert plate (25) which can be secured in the conveying channel (6).

## Revendications

1. Machine de récolte (2), en particulier chariot de chargement ou presse à balles, comprenant une unité de réception (4), de préférence un rouleau ramasseur, un canal de transport (6) disposé en aval de l'unité de réception (4) dans le sens de transport du produit à récolter et un rotor de transport (8) qui comporte un grand nombre d'éléments de transport (10), par exemple de dents de transport, qui font saillie dans le canal de transport (6) et qui comportent également une pointe de transport (12) à leur extrémité extérieure ainsi que plusieurs couteaux (14) qui font sélectivement saillie dans le canal de transport (6) et qui coopèrent avec les éléments de transport (10) du rotor de transport (8) pour déchiqueter le produit à récolter, la pointe de transport (12) de l'élément de transport (10) étant prévue de manière asymétrique par rapport à un plan médian longitudinal de l'élément de transport (10), la pointe de transport (12) de l'élément de transport (10) étant à une distance de position latérale par rapport à un couteau (14) associé à l'élément de transport (10) inférieure à celle du plan médian longitudinal de l'élément de transport (10), un élément de transport (10) comportant un support (18) relié au rotor de transport (8) et une pièce rapportée (20) munie de la pointe de transport (12) et fixée au support (18), **caractérisée en ce que** la pièce rapportée (20) est fixée au support (18) de manière asymétrique par rapport à un plan médian longitudinal (H) du support (18), la distance de position latérale du bord extérieur longitudinal de la pièce rapportée (20) dirigée vers le couteau associé (14) par rapport au plan médian longitudinal (H) du support (18) étant inférieure à la distance de position latérale du bord extérieur longitudinal de la pièce rapportée (20) dirigée à l'opposé du couteau associé (14).

2. Machine de récolte (2) selon la revendication 1, **caractérisée en ce que** la distance entre l'élément de transport (10) et le couteau (14) associé à l'élément de transport (10) est choisie de façon à effectuer une coupe en ciseaux du produit à récolter.

3. Machine de récolte (2) selon l'une des revendications précédentes, **caractérisée en ce que** le côté de l'élément de transport (10) qui est dirigé vers les couteaux (14) pendant le fonctionnement est courbé de manière convexe lorsqu'on le regarde dans la direction de l'axe de rotation du rotor de transport (8).

4. Machine de récolte (2) selon l'une des revendications précédentes, **caractérisée en ce que** les éléments de transport individuels (10) sont disposés de manière décalée les uns par rapport aux autres de façon à former un ensemble en spirale sur le rotor de transport (8) .

5. Machine de récolte (2) selon l'une des revendications précédentes, **caractérisée en ce que** des nervures (24) qui s'étendent dans le sens de transport sont placées de manière fixe dans le canal de transport (6) et au moins une nervure (24) associée à l'élément de transport (10) est conçue de façon à faire saillie, au cours d'une révolution de l'élément de transport (10), au moins partiellement dans un évidement de l'élément de transport (10) dans la zone de sa pointe de transport (12) .

6. Machine de récolte (2) selon la revendication 5, **caractérisée en ce qu'**au moins deux nervures (24) de hauteurs différentes sont disposées entre deux couteaux (14) sur au moins un côté des éléments de transport (10), la nervure (24) de plus faible hauteur étant à une plus petite distance de position latérale de la pointe de transport (12) de l'élément de transport associé (10) que la nervure (24) de plus grande hauteur.

7. Machine de récolte (2) selon la revendication 6, **caractérisée en ce que** les nervures (24) de plus faible hauteur sont plus courtes que les nervures (24) de plus grande hauteur.

8. Machine de récolte (2) selon l'une des revendications 5 à 7, **caractérisée en ce qu'**au moins une nervure (24) est disposée du côté de la pointe de transport (12) qui est opposé au couteau associé (14).

9. Machine de récolte (2) selon l'une des revendications 5 à 8, **caractérisée en ce que** les nervures (24) comportent un biseau ou un arrondi à l'extrémité qui est dirigée vers l'unité de réception (4).

10. Machine de récolte (2) selon l'une des revendications 5 à 9, **caractérisée en ce que** les nervures (24) sont fixées par soudage.

11. Machine de récolte (2) selon l'une des revendications 5 à 10, **caractérisée en ce que** les nervures (24) sont fixées sur une tôle d'insertion (25) qui peut être placée de manière fixe dans le canal de transport (6).
